# FASCICULE DE BREVET EUROPEEN

(11) **EP 0 447 333 B1**
(45) Date de publication et mention de la délivrance du brevet: **17.08.1994**
(21) Numéro de dépôt: 91420081.1
(22) Date de dépôt: 06.03.1991
(51) Int. Cl.: F16D 43/06

(54) **Embrayage automatique, notamment pour dispositif de contrôle de vanne**
Automatische Kupplung, insbesondere für eine Ventilsteuervorrichtung
Automatic clutch, especially for a valve control device

(30) Priorité: 16.03.1990 FR 9003644
(43) Date de publication de la demande: 18.09.1991
(73) Titulaire: JEAMBRUN APPAREILLAGES S.A.R.L., F-25120 Maiche (FR)
(72) Inventeur: Jeambrun, Georges, F-25120 Maiche (FR)
(74) Mandataire: Moinas, Michel

(56) Documents cités:
- GB-A- 1 378 258
- GB-A- 2 195 146
- US-A- 2 720 299
- US-A- 4 322 985
- US-A- 4 748 862

## Description

La présente invention est relative à un embrayage automatique pour entraîner une transmission mécanique, notamment au sein d'un dispositif de contrôle de vanne, lequel embrayage doit s'enclencher lorsque l'organe moteur atteint une vitesse de rotation prédéterminée dans un sens comme dans l'autre, mais qui ne doit se relâcher que si la vitesse de rotation et la charge dans la transmission ont été annulées. En effet, un tel embrayage permet d'accoupler un organe moteur tel que moteur thermique, hydraulique ou électrique à une transmission pour ouvrir une vanne contre l'effet d'un ressort et la maintenir contre une butée le temps d'engager un taquet de retenue. Une fois la tension dans la transmission relâchée, cet embrayage doit se libérer afin de permettre au ressort de fermer à tout moment par la suite la vanne rapidement sans pour autant devoir entraîner également l'organe moteur.

Les embrayages entièrement mécaniques contiennent fréquemment des masselottes tels que rouleaux ou billes qui, en avançant radialement sur un plan conique sous l'effet de la force centrifuge, déplacent axialement une pièce d'embrayage usuellement à friction compte-tenu de la faible course réalisable. On peut citer à titre d'exemple, les embrayages à friction pour entraîner une transmission ou appliquer un frein décrit dans les document GB 2 111 641, FR 2 614 377, DE 2 943 685 et DD 148 086. Toutefois, ce mode d'entraînement **p**ar friction n'est guère utilisable dans un dispositif de contrôle de vanne car il peut laisser craindre un phénomène de patinage lorsque la charge dans la transmission augmente au fur et à mesure alors que le mouvement doit impérativement être poursuivi.

Les documents US 3 851 532, GB 1 378 258 équivalent à GB 2 195 146, US 4748 862 et US 4 322 985 divulguent des dispositifs de débrayage pour démarreurs lorsque le moteur lancé acquiert une certaine vitesse. Ces dispositifs comprennent deux plateaux internes garnis sur leurs faces en vis-à-vis de dents en correspondance. Des billes situées initialement au centre entre les plateaux écartent ceux-ci sous l'effet de la force centrifuge, ce qui désengage les dents. Dans le dispositif de débrayage pour démarreur décrit dans le document US 2 720 299, représentant l'état de la technique le plus proche, le plateau mobile présente une couronne interne dont le bord frontal denté traverse le plateau fixe pour s'engager dans des dents en vis-à-vis ménagées à l'extrémité de l'arbre de sortie du démarreur. Cette configuration des dents facilite le travail des billes pour le débrayage à haute vitesse de rotation, mais pas du tout l'embrayage d'un pignon et d'une roue dentée externe à faible vitesse de démarrage tel qu'envisagé dans le dispositif de contrôle des vannes.

Le but de la présente invention est un dispositif d'embrayage s'enclenchant très rapidement et restant enclenché même si la vitesse de rotation vient à tomber à une faible valeur alors que la charge dans la transmission est toujours présente.

Ces buts sont réalisés grâce à un embrayage automatique comprenant d'une part une cage à fond conique concave solidaire d'un arbre menant et séparée par des parois radiales internes en une suite de logements internes dans chacun desquels une bille peut se déplacer radialement jusqu'à buter contre la paroi latérale de la cage. Cet embrayage comprend d'autre part un plateau mobile en translation le long de l'arbre, entraîné en rotation en permanence par l'arbre et/ou la cage et pressé par des moyens de rappel en direction des billes de la cage. Ce plateau est muni en l'un de ses pourtours circulaires externes d'une couronne dentée dont les dents sont parallèles à l'arbre menant, cette couronne dentée engrenant, en position embrayée une première roue dentée de la transmission mécanique.

De préférence, l'entraînement en rotation du plateau est réalisé par au moins un doigt de la cage traversant un orifice en correspondance du plateau. Ce doigt peut présenter sur sa surface latérale une partie oblique située de telle sorte qu'elle se retrouve sous le plateau lorsque ce dernier est en position embrayée.

Avantageusement, la face interne du plateau vis-à-vis des billes de la cage est également conique concave.

L'invention sera mieux comprise à l'étude d'un mode de réalisation pris à titre d'exemple nullement limitatif et décrit dans les figures annexées dans lesquelles :

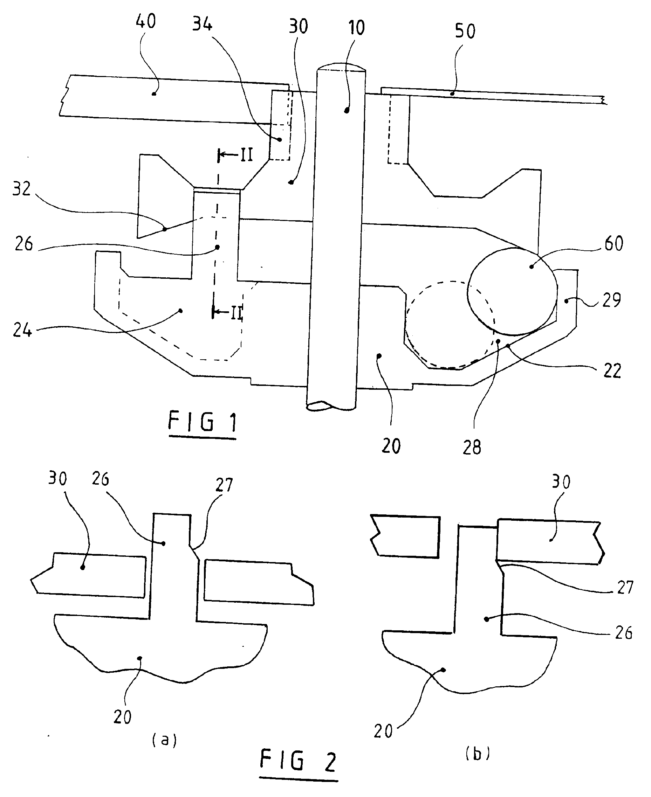

- la figure 1 présente l'embrayage en coupe verticale,
- les figures 2a et 2b sont des vues partielles en coupe selon l'axe II de la figure 1

L'embrayage automatique selon l'invention comprend d'abord une cage 20 solidaire de l'arbre menant 10. Cet arbre menant peut être l'axe d'une commande manuelle ou l'arbre de sortie d'un moteur thermique, hydraulique ou électrique. La cage 20 se présente sous la forme d'une cuvette dont le fond tronconique concave 22 est terminé par une paroi latérale cylindrique 29. L'intérieur de cette cage 20 est séparé par une suite de parois internes 24 radiales en logements individuels 28 contenant chacun une bille 60. Le diamètre de la cage 20 et des billes 60 est conçu de telle sorte que ces dernières puissent se déplacer radialement d'environ une fois leur diamètre le long du plan incliné 22 sous l'effet de la force centrifuge lors de l'entraînement en rotation de la cage 20 par l'arbre menant 10. Ce déplacement radial des billes 60 est limité par la paroi latérale 29.

L'embrayage automatique comprend d'autre part un plateau mobile 30 enfilé sur l'arbre menant 10 vis-à-vis de la cage 20 qu'elle ferme à la manière d'un couvercle. Ce plateau 30 est mobile en translation le long de l'arbre menant 10 mais entraîné en rotation par un ou plusieurs doigts d'entraînement 26 solidaires de la cage 20 et traversant un orifice en correspondance du plateau 30. En variante, ce plateau mobile 30 aurait également pu être entraîné en rotation par une cheville longitudinale de l'arbre menant 10 engagé dans une rainure en correspondance le long de l'orifice central du plateau mobile, ou par une suite de dents longitudinales de l'arbre menant 10 engagé dans des dents en correspondance ménagées sur le pourtour de l'orifice central du plateau.

Comme mieux illustré sur les figures 2, le doigt 26 peut présenter un décrochement oblique 27 sur la partie sensiblement médiane de la face latérale orientée dans le sens de rotation directe pour temporairement accrocher le plateau 30 lorsque ce dernier est en position haute, donc embrayé.

Avantageusement, la face interne du plateau 30, c'est-à-dire la face vis-à-vis de la cage 20, présente également un pourtour tronconique concave en face des billes 60.

De manière particulière dans cette invention, le plateau 30 présente en sa partie supérieure un pignon 34 dont les dents se trouvent être parallèles à l'arbre 10. Ce pignon 34 est prévu pour venir s'engager avec une roue dentée 40 constituant le premier élément d'une transmission mécanique à entraîner. Par ailleurs, un ressort à lame 50 tend à pousser ce plateau 30 vers la cage 20, étant bien entendu que l'on aurait également pu utiliser un ressort cylindrique enfilé sur un prolongement vertical non représenté de l'arbre menant 10, ce ressort agissant entre la face supérieure du plateau mobile 30 et un épaulement du prolongement.

Tel que décrit précédemment, l'embrayage automatique fonctionne de la manière suivante. Initialement, toutes les billes 60 se situent au fond de la cage 20 comme illustré par la bille dessinée en traits discontinus sur le dessin annexé. Le ressort 50 maintient alors le plateau mobile 30 contre les billes 60 en position inférieure donc fermant la cage à la manière d'un couvercle. Dans cette position, le pignon 34 est désengagé de la roue dentée 40.

Lorsque l'arbre menant 10 commence à touner, il entraîne la cage 20 et avec elle le plateau mobile 30. La force centrifuge tend à déplacer immédiatement les billes 60 en direction de la paroi latérale 29 ce qui, compte-tenu des plans inclinés 22 et 32, déplace ce plateau mobile 30 vers le haut contre l'effet du ressort 50. Ce déplacement vertical du plateau mobile 30 provoque l'engagement du pignon 34 dans les dents de la roue 40. Cet engagement est complet lorsque les billes 60 arrivent en butée contre la paroi latérale 29, soit un déplacement vertical du plateau 30 de l'ordre de 3 à 5 mm. Ce déplacement vertical est en fait déterminé par l'angle des surfaces tronconiques 22 et 32. Il est à noter que, lors de la levée du plateau 30, celui-ci est passé devant la partie oblique 27 du doigt 26.

Si la vitesse de rotation de l'arbre 10 et de la cage 20 vient à diminuer, voire s'annuler, alors que la tension dans la transmission est toujours présente, les billes 60 reviennent en position basse mais le plateau mobile 30 reste enclenché avec la roue dentée 40. En effet, l'action du ressort 50 vers le bas reste négligeable vis-à-vis des forces de friction engendrée d'une part entre le pignon 34 et la roue dentée 40 et d'autre part entre le plateau mobile 30 et l'arbre menant 10 par la tension mécanique de la transmission toujours présente. Ce phénomène est essentiellement dû à l'orientation du pignon 34 par rapport à l'arbre menant 10 faisant que le couple appliqué par la roue dentée 10 au plateau mobile 30 se trouve perpendiculaire à l'axe de l'arbre menant 10 donc perpendiculaire à la direction de déplacement vers le bas du plateau mobile 30. En d'autres termes, le ressort 50 ramène le plateau mobile 30 contre la cage 20 uniquement si celle-ci ne tourne plus et que la tension dans la transmission est anihilée. De plus, la partie oblique 27 du doigt 26 confirme cette retenue du plateau 30 tant que cette tension dans la transmission n'est pas anihilée.

Comme on a pu le constater à la lecture de cet exposé, l'invention propose un embrayage automatique remplissant les fonctions désirées et ce avec des organes mécaniques de conception simple. De nombreuses améliorations peuvent être apportées à cet embrayage automatique dans le cadre des revendications.

## Revendications

1. Embrayage automatique pour entraîner une transmission mécanique comprenant une cage (20) à fond conique concave (22) solidaire d'un arbre menant (10) et séparée par des parois radiales internes (24) en une suite de logements (28) dans chacun desquels une bille (60) peut se déplacer radialement jusqu'à buter contre la paroi latérale (29) de la cage ; ainsi qu'un plateau (30) mobile en translation le long de l'arbre (10), pressé par des moyens de rappel (50) en direction des billes de la cage, et entraîné en rotation en permanence par l'arbre et/ou la cage (20), caractérisé en ce que ce plateau est muni en l'un de ses pourtours circulaires externe d'une couronne dentée (34) dont les dents sont parallèles à l'arbre menant (10) et engrenant, en position embrayée, une première roue dentée (40) de la transmission mécanique.

2. Embrayage selon la revendication 1, caractérisée en ce que l'entraînement en rotation du plateau (30) est réalisé par au moins un doigt (26) de la cage (20) traversant un orifice en correspondance du plateau (30). cmathlot

3. Embrayage selon la revendication 2, caractérisée en ce que le doigt (26) de la cage (20) présente sur sa surface latérale une partie oblique (27) située de telle sorte qu'elle se retrouve sous le plateau lorsque ce dernier est en position embrayée.

4. Embrayage selon l'une des revendications précédente, caractérisé en ce que la face interne (32) du plateau (30) vis-à-vis des billes (60) de la cage (20) est conique concave.

## Patentansprüche

1. Automatische Kupplung zur Ausführung einer mechanischen Kraftübertragung, umfassend ein Gehäuse (20) mit einem konischen konkaven Boden (22), das an einer Antriebswelle (10) befestigt und durch radiale Innenwände (24) in eine Reihe von Aufnahmen (28) unterteilt ist, wobei in jeder dieser Aufnahmen eine Kugel (60) radial verschoben werden kann, bis sie gegen die Seitenwand (29) des Gehäuses anliegt; sowie eine Platte (30), die entlang der Welle (10) verschiebbar ist und durch Rückstellmittel (50) in die Richtung der Kugeln des Gehäuses gepreßt wird und durch die Welle und/oder das Gehäuse (20) ständig in Drehung versetzt wird, dadurch gekennzeichnet, daß diese Platte an einem ihrer äußeren Kreisumfänge mit einem Zahnkranz (34) versehen ist, dessen Zähne parallel zur Antriebswelle (10) sind und in der eingerückten Position mit einem ersten Zahnrad (40) der mechanischen Kraftübertragung in Eingriff stehen.

2. Kupplung nach Anspruch 1, dadurch gekennzeichnet, daß die Platte (30) durch mindestens einen Finger (26) des Gehäuses (20) in Drehung versetzt wird, der durch eine entsprechende Öffnung der Platte (30) geht.

3. Kupplung nach Anspruch 2, dadurch gekennzeichnet, daß der Finger (26) des Gehäuses (20) auf seiner seitlichen Oberfläche einen abgeschrägten Teil (27) aufweist, welcher derart angeordnet ist, daß er unter der Platte liegt, wenn sich diese in der eingerückten Position befindet.

4. Kupplung nach einem der vorangehenden Ansprüche, dadurch gekennzeichnet, daß die Innenfläche (32) der Platte (30) gegenüber den Kugeln (60) des Gehäuses (20) konisch-konkav ist.

## Claims

1. An automatic clutch for driving a mechanical transmission comprising a cage (20) with concave conical bottom (22) securely attached to a driving shaft (10) and separated by internal radial walls (24) into a succession of housings (28) in each of which a ball (60) can move radially so far as to rest against the lateral wall (29) of the cage; as also a plate (30) movable in translation along the shaft (10), pressed by return means (50) in the direction of the balls of the cage, and driven permanently in rotation by the shaft and/or the cage (20), characterised in that this plate is provided at one of its outer circular peripheries with a crown gear (34) the teeth of which are parallel to the driving shaft (10) and meshing, in engaged position, with a first cogwheel (40) of the mechanical transmission.

2. The clutch according to Claim 1, characterised in that the driving in rotation of the plate (30) is achieved by at least one finger (26) of the cage (20) passing through a corresponding aperture of the plate (30).

3. The clutch according to Claim 2, characterised in that the finger (26) of the cage (20) has on its lateral surface an oblique part (27) situated so that it is found under the plate when the latter is in engaged position.

4. The clutch according to any of the preceding claims, characterised in that the inner face (32) of the plate (30) facing the balls (60) of the cage (20) is concave conical.
